# EUROPÄISCHE PATENTANMELDUNG

(11) **EP 1 918 240 A1**
(43) Veröffentlichungstag der Anmeldung: **07.05.2008**
(21) Anmeldenummer: 07118082.2
(22) Anmeldetag: 09.10.2007
(51) Int. Cl.: B66B 9/16

(54) **Transportable Vorrichtung und Verfahren zur Errichtung von Offshore-Windenergieanlagen**

(30) Priorität: 28.10.2006 DE 102006050900
(71) Anmelder: Ed. Züblin Aktiengesellschaft, 70567 Stuttgart (DE)
(72) Erfinder: Dehlinger, Christian, 73630, Remshalden (DE)

(57) **Zusammenfassung**

Die Erfindung sieht vor, die Gondel (4a) der Windenergieanlage auf einem Lift (1) an der Außenseite des Mastes (3), auf dem sie installiert werden soll, emporzufahren und dann auf die Mastspitze zu verschieben, dort auszurichten und zu montieren. Auf die gleiche Weise können auch die einzelnen Mastabschnitte (4b), aus denen sich der Gesamtmast zusammensetzt, übereinandergetürmt werden, nachdem der unterste von (meistens) drei Mastabschnitten konventionell auf der Gründung errichtet wurde.

Der Lift (1) ist transportabel und für die sukzessive Verwendung an mehreren Windenergieanlagen vorgesehen. Er besteht im wesentlichen aus einer Liftplattform (1) und Einrichtungen zum Anheben und Absenken und nützt den schon erstellten Teil des Mastes (3) als eigenen Förderweg für den Transport der noch fehlenden Teile der Windenergieanlage. Die Liftplattform (1) wird entlang dieses Förderweges (3) durch Pressen (5) oder Seilzüge/Litzenheber (12) bewegt.

## Beschreibung

### Technisches Gebiet

Die Erfindung betrifft die Errichtung von Windenergieanlagen, besonders solcher in Offshore-Gebieten. Ganz besonders betrifft sie die Installation der Gondel.

### Stand der Technik

Der Mast einer Windenergieanlage besteht meistens aus einem Stahlrohr (häufigste Ausführungsweise, besonders bei Offshore-Analgen), einem Stahlbetonrohr oder einem Gitter. Da die Masten der Windenergieanlagen sehr hoch sind (größenordnungsmäßig 100 m), setzt man den Mast meistens aus mehreren kürzeren Einheiten zusammen. Diese Einheiten werden gewöhnlich mittels eines Kranes aufeinander gesetzt. Im Offshore-Bereich werden hierfür Schwimmkräne eingesetzt, die sehr teuer angemietet werden müssen und einen erheblichen Teil der späteren Gesamtkosten der Windenergieanlage ausmachen.
Den größten Aufwand erfordert die Montage der mehrere hundert Tonnen schweren Gondel auf der Spitze des Mastes, wofür Kräne enormer Tragfähigkeit und Höhe benötigt werden.
Darüber hinaus geht die Tendenz auch zu immer höheren Türmen und noch schwereren Gondeln.
Zum vertikalen Transport von Lasten werden in der Technik nicht nur Kräne, sondern auch Aufzüge/Lifts verwendet. Diese bestehen (Lexikon des Bauingenieurwesens) aus dem "Lastaufnahmemittel" und einem meist senkrechten "Förderweg". Man unterscheidet selbsttragende und nichtselbsttragende Aufzüge. Aufzüge (Förderweg und Lastaufnahmemittel) werden ortsfest in bestehende Gebäuden eingebaut, um darin Lasten zu befördern.
Ein Kran stellt gewissermaßen einen fahrbaren/versetzbaren Förderweg mit Hebemitteln aber ohne Lastaufnahmemittel dar.

### Aufgabe der Erfindung

Aufgabe der Erfindung ist es, eine Vorrichtung und ein Verfahren zur Errichtung von Offshore-Windenergieanlagen anzugeben, das ohne teure Kräne auskommt und auch die Erstellung von noch größeren Windenergieanlagen ermöglicht.

### Darstellung der Erfindung

Die Aufgabe wird durch die im Kennzeichen der Ansprüche 1 und 7 angegebenen Merkmale gelöst.
Im wesentlichen sieht die Erfindung hierzu vor, die Gondel (4a) der Windenergieanlage auf einem Lift (Liftplattform (1) plus Führungs- und Hebevorrichtungen) an der Außenseite des Mastes (3), auf dem sie installiert werden soll, emporzufahren und dann seitwärts auf die Mastspitze zu verschieben/versetzen, dort auszurichten und zu montieren.
Auf die gleiche Weise können auch die einzelnen Mastabschnitte (4b), aus denen sich der Gesamtmast zusammensetzt, übereinandergetürmt werden, nachdem der unterste Mastabschnitt (von meistens insgesamt drei) konventionell auf der die Wasseroberfläche überragenden Gründung errichtet wurde. Es wird also der bereits errichtete Teil des Mastes (3) statisch zum weiteren Aufbau der Gesamtanlage herangezogen! Der bereits errichtete Teil des Mastes (3) ist Förderweg des Liftes (Lastaufnahmemittels) und dient dem weiteren Aufbau der Gesamtstruktur.

Der erfindungsgemäße Lift besteht aus einer höhenverschiebbaren Plattform (1) plus Zusatzeinrichtungen und bewegt sich aufwärts durch:
Variante A: - unterhalb der Liftplattform (1) befindliche Pressen (5) entlang von am Mast (3) angebrachten Schienen (7)
Variante B: - Seilzüge/Litzenheber (12), die sich von einer Unterkonstruktion der Liftplattform (1) zu Befestigungsmitteln (z.B. 13) im oberen Bereich des bereits errichteten Mastes (3) erstrecken
Variante C: - unterhalb der Liftplattform (1) befindliche Pressen (5), die sie von einer am Mast (3) festklemmbaren Abstützplattform (16) aus nach oben stemmen, wobei sich die Liftplattform (1) und die Abstützplattform (16) taktweise wechselweise am Mast (3) festklammern ("Palmenkletterverfahren")

Der schon erstellte Teil des Mastes (3) wird dabei von der Liftplattform (1) schon als statisch tragender Förderweg für den noch zu erstellenden Teil der Windenergieanlage verwendet. Der bereits errichtete Teil des Mastes (3) ist sozusagen der eigene "Kranarm" des Liftes.
Der Lift (Liftplattform (1) plus Zusatzeinrichtungen) oder der wesentliche Teil davon ist darüber hinaus nicht stationär an eine Windenergieanlage gebunden, sondern mobil, also von Anlage zu Anlage transportierbar! Er ist also bevorzugt für die sukzessive Verwendung an mehreren Windenergieanlagen vorgesehen. (Er könnte natürlich auch als bewegliche Wartungsplattform dort verbleiben. Dann müßte aber für jede Windenergieanlage ein eigener Lift bereitgestellt werden.)

Zum Ausgleich der ansonsten einseitig auf den Mast (3) einwirkenden Kräfte kann ein bevorzugt variables Gegengewicht (17) auf der der Liftplattform (1) gegenüberliegenden Seite des Mastes (3) dienen. Dieses bevorzugt variable Gegengewicht (17) kann z. B. ein Tank sein, der nach Bedarf mit Wasser gefüllt oder geleert wird, oder ein radial zum Mast (3) verschiebbares Gewicht. Das Gegengewicht (17) kann auch ein Kran oder eine andere Haltevorrichtung sein, z.B. für die zu transportierenden hochaufragenden Mastabschnitte (4b).

Im folgenden werden die drei Varianten der Erfindung näher erläutert:

### Variante A (Hub durch Pressen):

Der Lift wird von Pressen (5) von unten schrittweise emporgedrückt. Die Pressen (5) stützen sich dabei an Bereichen der Mastwandung (3) ab.
Um die beim Emporfahren der lasttragenden Liftplattform (1) auf die Wand des Mastes (3) wirkenden Kräfte möglichst gering zu halten, weist der Mast (3) (mindestens) zwei Schienen (7) auf, die (bevorzugt dauerhaft) beidseitig und statisch belastbar an der Außenseite des Mastes (3) angebracht (z. B. angeschweißt) sind.
Auf diesen Schienen (7) werden Gleitlager oder Rollenlager (2) des Lifts geführt, die sich so dicht wie möglich am Mast (3) entlangbewegen, damit nur möglichst geringe Momente über die Schienen (7) in die Wandung des Mastes (3) übertragen werden.
Größenordnungsmäßig weisen die Schienen (7) z.B. einen Querschnitt von 5 mal 5 Zentimetern auf. Sie müssen aber über keinen quadratischen oder rechteckigen Querschnitt verfügen, sondern können einen Querschnitt haben, der das Gleitlager oder Rollenlager (2) sicherer führt, indem z.B. am Rand eine Krempe vorhanden ist. Die Schienen (7) sind aber von ihrem Querschnitt so klein gehalten, daß sie das Schwingverhalten der Windenergieanlage im Wind durch ihre Versteifungswirkung nicht negativ beeinflussen.
Die zwei Schienen (7) verlaufen um ungefähr 180° einander gegenüber auf der Mastwand (3).
Die Pressen (5) stützen sich unterhalb der Plattform (1) an der Schiene (7) ab, bevorzugt über eine Klemmvorrichtung und hierzu passende Ausnehmungen an den Schienen (7).
Wurde die Liftplattform (1) um einen bestimmten von der Presse (5) abhängigen Betrag angehoben, wird die Plattform (1) am Mast (3) arretiert, und der Ansatzpunkt der Pressen (5) an den Schienen (7) wird um das gleiche Stück nach oben bewegt (dabei werden die Pressen (5) wieder zusammengeschoben) und dort erneut gelenkig befestigt. Es folgt der nächste Preßvorgang. Dieses Vorgehen wird fortgesetzt, bis die Liftplattform (1) ihre Bestimmungshöhe erreicht hat.

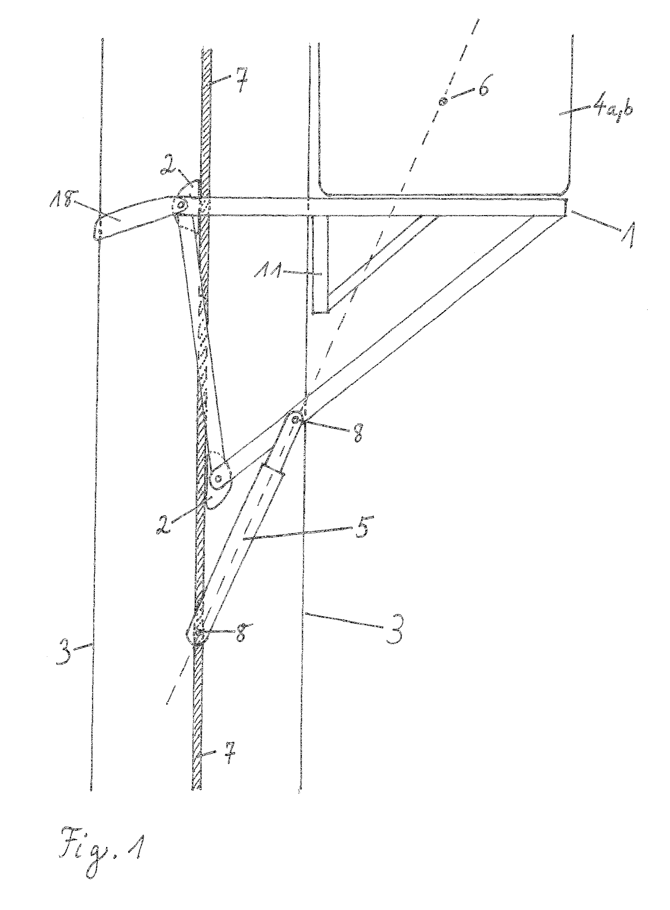

Das Verschieben der Liftplattform (1) an den Schienen (7) erfolgt auf Rollenlagern oder Gleitlagern (2). Von der Seite betrachtet, stellt der Lift für den Fall einer einseitigen Ausführungsweise (ohne Gegengewicht (17) auf der anderen Mastseite (3)) im einfachsten Falle ein ungefähr rechtwinkliges Dreieck dar (s. Fig. 1), welches dem Kräftedreieck der auftretenden Kräfte gerecht wird: Auf einem Schenkel des Dreiecks ist die Last (4a oder 4b, Gondel oder Mastabschnitt) plaziert, der andere verläuft ungefähr entlang der Schiene (7), und über die lange Grundseite wird die Gewichtskraft auf den Mast (3) übertragen Über die Dreieckseite, auf der die Last (4a, 4b) aufliegt, wirkt gemäß Kräfteparallelogramm senkrecht zum Mast (3) eine Zugkraft, die durch ein entlang der Schiene (7) verschiebbares Kraftübertragungsmittel (2), welches sich, von der Last (4a, 4b) aus gesehen, hinter der Schiene (7) befindet, auf die Schiene (7) als Druckkraft übertragen wird. Das Kraftübertragungsmittel ist bevorzugt ein Rollenlager oder ein Gleitlager (2).
Auch über die lange Dreiecksgrundseite wird eine Druckkraft auf die Schiene (7) übertragen und zwar ebenfalls vermittels eines entlang der Schiene (7) verschieblichen Kraftübertragungsmittels (2), diesmal aber auf die der Last (4) zugewandte Seite der Schiene (7). Auch bei diesem Kraftübertragungsmittel handelt es sich bevorzugt um ein Rollenlager oder ein Gleitlager (2). Zusätzlich existieren am Lift noch lösbare Arretiermittel, die an der Schiene befestigt und von ihr gelöst werden können und die es gestatten, den Lift auch dann auf konstanter Höhe zu halten, wenn gerade keine aufwärts gerichteten Kräfte ihn nach oben drücken/heben.
Diese Arretiermittel können selbstarretierend arbeiten, sobald die aufwärts gerichtete Kraft der Pressen (5) fehlt. Die Gewichtskraft der Last (4a, 4b), die nicht mehr durch die aufwärtsgerichtete Hebekraft der Pressen (5) kompensiert ist, preßt dann die Arretiermittel gegen die Schiene (7).
Hierzu kann die Schiene (7) Verzahnungen aufweisen, in die die Arretiermittel eingreifen.
In einem besonders einfachen Ausführungsbeispiel ist die Schiene (7) selbst nicht glatt, sondern wenigstens auf einer Seite mit rauher oder strukturierter Oberfläche versehen, und das Kraftübertragungsmittel ist ein ebenfalls nicht glattes Gleitlager (2), welches bei Anpreßdruck an die Schiene (7) sich mit dieser verzahnt und die Liftplattform (1) am Abrutschen hindert. (Eine andere Ausführungsform wäre z.B. auch ein Schnarrenmechanismus.) Die aufwärts gerichtete Kraft der Pressen (5) ist in diesem Falle so gerichtet, daß während des Anhebens kein Anpreßdruck des Gleitlagers (2) mehr an die Schiene (7) erfolgt, so daß das Gleitlager (2) an der Schiene (7) entlanggleiten kann. Unterschreitet die Anhebekraft die Gewichtskraft, tritt hingegen sogleich Haftung des Gleitlagers (2) an der Schiene (7) auf und die Liftplattform (1) ist arretiert. Im Falle von Pressen (5) muß die drückende Kraft in Richtung des Schwerpunktes (6) von Liftplattform (1) plus Last (4a oder 4b) gerichtet sein, wie es in der Fig.1 dargestellt ist.
Im Falle der Verwendung eines Lifts mit Ausgleichsgewicht (17) auf der gegenüberliegenden Seite des Mastes (3) befindet sich der Schwerpunkt des Systems Liftplattform (1) plus Last (4a bzw. 4b) ungefähr mittig im Mast (3) und zwischen den zwei auf gegenüberliegenden Seiten des Mastes (3) verlaufenden Schienen (7). Es treten dann keine oder kaum Momente auf die Schienen (7) auf. Die Schiene (7) ist dann bevorzugt mit Einkerbungen versehen, in die als Arretiermittel ein Schnarrenmechanismus eingreift.

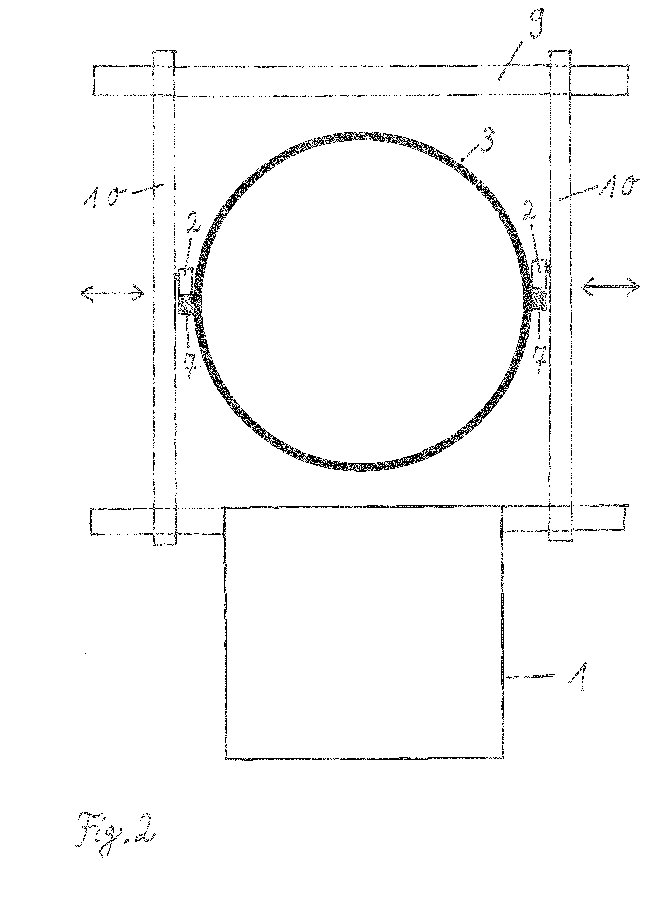

Außer zylindrischen Türmen von Windenergieanlagen, auf die der bereits beschriebene Mechanismus anwendbar ist, gibt es aber auch häufig konisch geformte Masten (3): Sie verjüngen sich nach oben zur Gondel (4a) hin. Da sich mit dem Durchmesser des Mastes (3) aber auch der Abstand der Führungsschienen (7) des Lifts zueinander kontinuierlich ändert, ist es dann notwendig, einen Mechanismus am Lift vorzusehen, der die Gleitlager oder Rollenlager (2) weiterhin sicher an den Führungsschienen (7) hält. Hierzu können die Rollenlager oder Gleitlager (2) an schwenkbaren Armen befestigt sein, die sich von der Liftplattform (1) zur Schiene (7) erstrecken. Bevorzugt ist aber eine Einfassung des Mastes (3) zwischen verschieblichen Trägern (10), wie in Fig. 2 dargestellt.

Die Regelung des Abstandes der Gleitlager oder Rollenlager (2) links und rechts des Mastes (3) relativ zueinander mit zunehmender Höhe erfolgt entweder manuell, so daß z.B. nach jedem Hebeschritt mit den Pressen (5) auch gleichzeitig der Abstand der Gleitlager/Rollenlager (2) zueinander neu eingestellt wird.
Oder die Anpassung erfolgt automatisch, indem z.B. auf die verschiebbaren Träger (10) eine ständige auf die Mastwand (3) gerichtete Kraft einwirkt, die die Gleitlager/Rollenlager (2) stets sicher auf der Schiene (7) hält. In diesem Fall ist es vorteilhaft, wenn die seitwärts gerichtete Kraft nicht auf die Mastwand (3) direkt, sondern auf die Außenkante der Schiene (7) einwirkt und zu diesem Zweck an dieser Außenkante der Schiene (7) ebenfalls ein Gleitlager oder Rollenlager (2) entlangläuft.
Es ist auch möglich, daß die Gleitlager/Rollenlager (2) durch eine Krempe oder eine Neigung der Schienenfläche selbst beim Emporgleiten an der Schiene (7) gehalten werden und dadurch die beweglichen Träger (10) automatisch mit dem sich verengenden Mastdurchmesser (3) nach innen fahren. Bevorzugt ist allerdings auch in diesem Fall zusätzlich eine die Träger (10) gegen den Mast (3) drückende Kraft (z.B. Federkraft).
Den Mast (3) einfassende verschiebbare Träger (10) an der Liftplattform (1) ermöglichen nicht nur eine Anpassung an den sich verändernden Durchmesser eines sich nach oben verjüngenden Mastes (3), sondern ermöglichen auch die Verwendung des gleichen Liftes an Masten (3) von anderem Durchmesser.

Die verschiebbaren Träger (10) links und rechts des Mastes (3) laufen bevorzugt auf einem weiteren stabilisierenden Träger (9) hinter dem Mast (3), so daß der Mast (3) durch ein stabiles Rechteck eingeschlossen ist, was eine zusätzliche Sicherung gegen ein "Entgleisen" und Abgleiten des Lifts darstellt. Gleichzeitig sollte auch noch unterhalb der Liftplattform (1) ein nach unten ragender Sicherungsklemmfortsatz (11) vorhanden sein, der, elastomergepolstert, im Notfall eines "Entgleisens" der Gleitlager/Rollenlager (2), großflächig gegen die Mastwand (3) gedrückt wird und ein Kippen der Liftplattform (1) verhindert. Es besteht die Möglichkeit, am Lift zusätzlich ein auf der Gegenseite der Liftplattform (1) um den Mast herumlaufendes Sicherungsband (18) anzubringen, das beim Hebevorgang lose mitgezogen wird, sich im Falle einer Entgleisung jedoch selbstätig spannt und dadurch das Abkippen des Liftes verhindert.

Das Verfahren nach Variante A sieht vor, zuerst den Lift am Mast (3) anzubringen. Dies geschieht sehr einfach durch Einhängen der Gleitlager oder Rollenlager (2) in die Schienen (7). Anschließend wird die Gondel (4a) oder ein Mastabschnitt (4b) vom Schiff aus auf die Plattform (1) des Lifts verschoben und diese dann so lange mittels Pressen (5) am Mast (3) emporgefahren, bis die Gondel (4a) oder der Mastabschnitt (4b) ihre/seine spätere Sollhöhe oder ein wenig mehr erreicht hat. Dann wird die Gondel beziehungsweise der Mastabschnitt (4) von der Plattform (1) seitlich auf seinen Bestimmungsort auf dem darunter befindlichen bereits errichteten Mast (3) verschoben (bevorzugt ebenfalls mittels Pressen) und dort ausgerichtet und befestigt.
Die Rotorblätter können nach Installation der Gondel (4a) auf dem Mast (3) mit einem Seilzug emporgezogen werden, oder sie können schon an der Nabe befestigt werden, während sich die Gondel (4) noch auf der Liftplattform (1) befindet. Bevorzugt wird dann das erste Blatt ungefähr in der Waagerechten von der Seite her montiert, während der Lift noch im abgesenkten Zustand ist. Anschließend wird die Nabe mit dem daran befestigten ersten Rotorblatt um 120 Grad nach oben gedreht (bei dreiblättrigen Windrädern). Dann wird wieder von der Seite her und ungefähr waagerecht das zweite Rotorblatt montiert. Anschließend wird der Lift mindestens so weit emporgefahren, daß mit einem Seilzug das noch fehlende dritte Blatt bis an die Nabe gezogen und dort befestigt werden kann, ohne daß es dabei ins Wasser hängt. Hierzu stehen die beiden anderen bereits montierten Rotorblätter ungefähr symmetrisch und bilden ein nach oben offenes weites V.
Oder es wird das noch fehlende dritte Blatt parallel an einem der bereits montierten Blätter lösbar befestigt, der Lift dann emporgefahren und das dritte Blatt vom anderen gelöst, in seine Sollposition gebracht und dann dort montiert. Vorteilhaft ist hierfür, wenn der Lift dabei nur so weit emporgefahren ist, daß das dritte Blatt an seinem unteren Ende gleichzeitig auf dem Schiff gehaltert werden kann, während es oben an der Nabe befestigt wird. Die Nabe trägt damit alle drei Rotorblätter.
Bei Windenergieanlagen mit einer anderen Anzahl von Rotorblättern wird das Vorgehen der Symmetrie entsprechend angepaßt.
Die Gondel (4a) mit den bereits montierten Rotorblättern wird dann weiter bis zur Mastspitze nach oben gefahren und dort von der Plattform (1) auf den endgültigen Standort verschoben.

Der Lift kann auch für Reparatur- und Wartungsarbeiten eingesetzt werden, wobei für einfache Arbeiten eine wesentlich leichter ausgeführte Plattform (1) verwendet werden kann, die dann bevorzugt auch mittels Seilzügen (12) nach oben gefahren wird, weil dies schneller geschehen kann.

Die Fig. 1 und 2 zeigen schematisch eine mögliche Ausführung der Erfindung.
Fig. 1 zeigt einen Blick von der Seite auf die am Mast (3) entlanglaufende Liftplattform (1), die durch Pressen (5) angehoben wird, deren Hubkraft in Richtung des Schwerpunktes von Liftplattform (1) plus Last (4a oder 4b) gerichtet ist.
Fig. 2 zeigt von oben einen Querschnitt durch den Mast (3) mit daran befindlichem Lift. In diesem Fall weist der Lift den Mast (3) einfassende verschiebbare Träger (10) auf, die ihm erlauben, auch an einem sich nach oben verjüngenden Mast (3) emporzufahren.

### Variante B (Hub durch Seilzüge/Litzenheber):

Statt durch Pressen (5), kann die Liftplattform (1) auch durch Seilzüge oder Litzenheber (12) angehoben werden. Das hat den Vorteil, daß die Liftplattform (1) im abgesenkten Zustand ein tieferes Niveau hat und leichter beladen werden kann, und daß auch keine Schienen (7) am Mast (3) angebracht sein müssen, die bei sehr stabiler Ausführung zu einer ungewünschten Versteifung desselben führen können. Darüber hinaus ist auch ein Anheben bei sich verjüngenden Türmen (3) einfacher möglich.
Es ergibt sich allerdings ein Problem, wenn die Liftplattform (1) ihre Bestimmungshöhe erreicht hat und das Ladegut (4a oder 4b) auf den Mast (3) verschoben werden soll. Hierzu dürfen sich die Seilzüge oder Litzenheber (12) nicht oberhalb der Oberkante des bereits errichteten Teils des Mastes (3) befinden, weil sonst das sperrige und schwere Ladegut (4) nicht an seinen Bestimmungsort verschoben werden kann.
Daher sieht die Erfindung die Möglichkeit vor, die Seilzüge bzw. Litzenheber (12) unterhalb der Oberkante des Mastes (3) zu befestigen. Hierzu verfügt entweder die Mastwand (3) selbst über Befestigungsmöglichkeiten, wie z.B. Schraubdurchführungen, oder an der Außenseite der Mastwand (3) sind Befestigungsmöglichkeiten stationär angebracht, z.B. angeschweißt oder angeschraubt, an denen die Seilzüge oder Litzenheber (12) lösbar befestigt werden können.
Solche nur lokal äußerlich angebrachte Befestigungsmöglichkeiten für Litzenheber oder Seilzüge (12) beeinträchtigen das Schwingungsverhalten des Mastes (3) nicht.
Eine besonders geeignete und stabile Ausgestaltung ist ein Stahlring, der etwas unterhalb des oberen Endes des Mastabschnitts befestigt ist (z.B. geschweißt oder geschraubt). An diesem Stahlring werden die Seilzüge bzw. Litzenheber (12) befestigt, mit denen die Liftplattform (1) nach oben gezogen wird. Der Stahlring trägt dazu bei, die auftretenden Kräfte möglichst gleichmäßig in die Mastwandung (3) einzuleiten.
Eine andere Ausführungsmöglichkeit, speziell für die Installation der Gondel (4) und besonders geeignet für sich nach oben verjüngende Türme (3), sieht am obersten Mastabschnitt Flossen (13) vor (ähnlich denen an einer Rakete), die so weit vom Mast (3) abstehen, daß die Seilzüge/Litzenheber (12), die an ihnen befestigt werden, eine senkrechte oder wenigstens deutlich senkrechtere Hebekraft auf die Liftplattform (1) ausüben, als wenn die Seilzüge/Litzenheber (12) mastnah befestigt wären. Bevorzugt tragen die Flossen (13) auch noch eine ringförmige Plattform am oberen Ende des Mastes (3), die als Arbeitsplattform dienen kann.
Solche Flossen (13) am Ende des Mastes (3) verändern die Steifigkeit des Mastes (3) nicht und damit auch nicht sein Schwingungsverhalten im Wind.

Der Ansatzpunkt der Seile/Litzen (12) an der Liftplattform (1) liegt ein deutliches Stück unterhalb der Tragefläche der Liftplattform (1) (also an deren Unterbau), damit es möglich wird, die Tragefläche bis auf das Niveau des oberen Endes des bereits errichteten Mastabschnittes (3) oder sogar etwas darüber anzuheben. Ein tiefer Ansatzpunkt der Seile/Litzen (12) ist auch für sich verjüngende Türme notwendig, damit die Litzen (12) am Ende nicht gar zu sehr von der Senkrechten abweichen, wenn die Tragefläche der Liftplattform (1) auf Sollniveau angehoben ist.
Im Falle der Verwendung von auskragenden Flossen (13) als Befestigung der Seilzüge/Litzenheber (12), die zu einem größeren Abstand der Seilzüge/Litzen (12) von der Mastwand (3) führen, kann auch ein höherer Ansatzpunkt der Seile/Litzen (12) an der Liftplattform (1) gewählt werden, da die Seile/Litzen (12) dann konstruktionsbedingt auch im angehobenen Zustand der Liftplattform (1) deutlich senkrechter verlaufen.

Der Lift von Variante B muß mit Ausgleichsgewicht (17) arbeiten. Hierzu umschließt die Liftplattform (1) den Mast (3) oder weist zumindest Träger (10) auf, die ihn U-förmig umgeben, wobei an den Schenkeln (10) des U der austarierbare Ballast (17) sitzt, im Bogen des U die Tragefläche der Liftplattform (1) mit Nutzlast (4a oder 4b).
Der besseren Steifigkeit wegen ist es aber bevorzugt, die Schenkel (10) des U durch eine Querstrebe (9) hinter dem Mast (3) zu verbinden. Diese Querstrebe (9) wird aber erst angebracht, nachdem beim Installieren des Liftes das U um den Mast (3) "herumgefädelt" wurde.
Bevorzugt wird der Abstand der Liftplattform (1) und der Träger (10, 9) zum Mast (3) z.B. über am Lift angebrachte breite Gleitlager oder Rollen/Reifen (14) eingehalten, und das auch bei starkem Wind, denn es wirken über diese Abstandshalter (14) keine Anteile der enormen Gewichtskräfte der Nutzlast (4a oder 4b) auf die Wand des Mastes (3) ein! Für sich nach oben verjüngende Türme (3) müssen diese Abstandshalter (14) relativ zur Mastmittelsenkrechten radial verstellbar sein, um sie dem veränderten Mastdurchmesser anpassen zu können.

Das Verfahren nach Variante B sieht vor, zuerst den Lift am Mast (3) anzubringen. Hierzu wird der Lift um den schon errichteten Mast (3) herum zusammengebaut, bzw., wenn er U-förmig ist, darum herum "gefädelt" und eventuell das U dann zur Stabilitätsverbesserung geschlossen (9). Der Lift wird am Mast (3) fixiert und die Last auf die Tragefläche der Liftplattform (1) gehoben/geschoben und auf der Gegenseite der Lift zum Ausgleich mit Ballast (17) austariert.
Die Liftplattform (1) wird sodann mittels Seilzügen oder Litzenhebern (12), die sich von der Unterseite der Liftplattform (1) bis zu Befestigungsmöglichkeiten am oberen Endes des bereits errichteten Mastes (3) erstrecken, emporgehoben, bis sich die Tragefläche der Liftplattform (1) auf Bestimmungshöhe oder ein wenig darüber befindet. Dort wird die Liftplattform (1) gegen horizontale Verschiebungen fixiert. Auch eine Fixierung am Mast (3) als Sicherung gegen Kippen ist vorteilhaft.
Dann wird die Gondel (4a) beziehungsweise der zu installierende Mastabschnitt (4b) von der Plattform (1) seitlich auf seinen Bestimmungsort auf dem darunter befindlichen Mastabschnitt (3) verschoben (bevorzugt mittels Pressen) und dort ausgerichtet und befestigt. Ungefähr gleichzeitig (abhängig von der Stabilität der Fixierung der Liftplattform (1) am Mast (3)) wird das Gegengewicht (17) auf der anderen Seite des Liftes vermindert, z.B. durch Ablassen von Ballastwasser.
Die Rotorblätter können wie unter Variante A beschrieben montiert werden. Der Lift kann auch für Reparatur- und Wartungsarbeiten eingesetzt werden, wobei für einfache Arbeiten eine wesentlich leichter ausgeführte Plattform (1) verwendet werden kann.
Die Liftplattform (1) kann zusätzlich durch Führungsschienen (7) entlang des Mastes (3) geführt und stabilisiert werden.

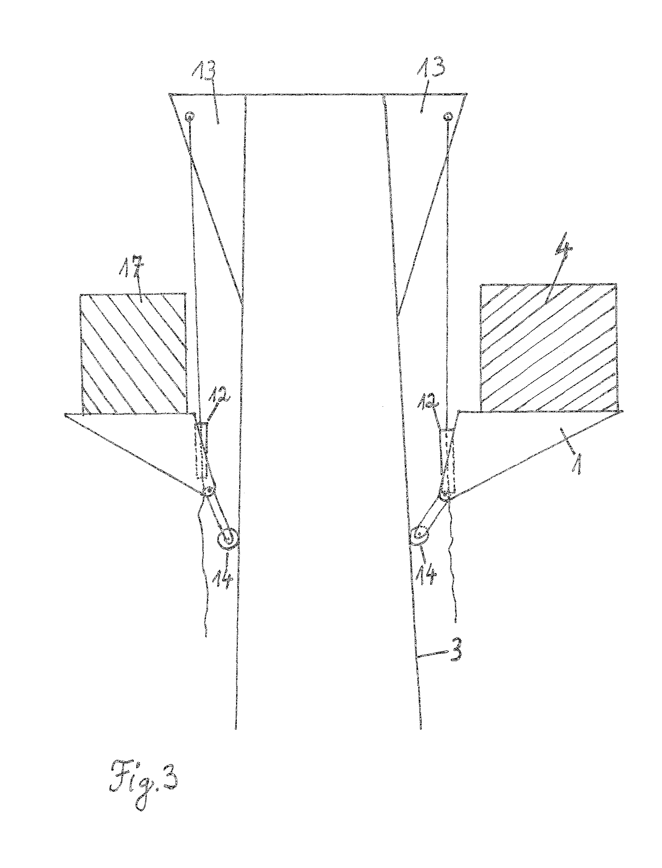

Die Fig.3 zeigt eine Seitenansicht auf einen Lift am Mast (3) nach Variante B. Der Hub erfolgt über Litzenheber (12), die an Flossen (13) am oberen Ende des bereits errichteten Mastes (3) angebracht sind. Die Flossen (13) tragen auch noch eine umlaufende Arbeits-/Aussichtsplattform.

### Variante C ("Palmenkletterverfahren"):

Der Lift wird von Pressen (5) von unten schrittweise emporgedrückt.
Dies geschieht mittels eines Verfahrens, das dem eines Palmenkletterers ähnelt: Der Lift besteht hierzu im wesentlichen aus zwei Ebenen, der Liftplattform (1), die von Pressen (5) von unten angehoben wird, und einer Abstützungsplattform (16), auf der sich die Pressen (5) abstützen, während sie die Liftplattform (1) anheben.
Liftplattform (1) und Abstützungsplattform (16) weisen in Richtung Mast bewegliche Mittel auf, mit denen sie sich lösbar am Mast (3) festklammern können. Durch dieses Festklammern entsteht eine Haftreibung, die verhindert, daß die jeweils klammernde Plattform (1 oder 16) am Mast (3) abrutscht, während die Pressenlänge verändert wird.
Die einzelnen Plattformen (1, 16) klammern sich während des Emporfahrens des Lifts wechselweise am Mast (3) fest: Während des Hubvorganges der Liftplattform (1) durch die unter ihr befindlichen Pressen (5) klammert sich die Abstützungsplattform (16) am Mast (3) fest, und im nächsten Schritt, wenn sich die Pressen (5) wieder zusammenziehen und dabei die unten befindliche Abstützungsplattform (16) nachgezogen wird, klammert sich die zuvor angehobene Liftplattform (1) am Mast (3) fest und die Abstützungsplattform (16) gleitet am Mast (3) entlang aufwärts.
Wechselweise koppeln und entkoppeln sich also Liftplattform (1) und Abstützungsplattform (16) an den Mast (3) und vom Mast (3) (Taktverfahren), bis die gewünschte Höhe der Liftplattform (1) erreicht ist.
Das Festklammern geschieht durch Anpressen von großflächigen Teilen (15) an die Mastwandung (3), bevorzugt ungefähr senkrecht zur Mastwand (3) oder schräg nach unten gerichtet, wobei diese Teile der Krümmung der Mastwandung (3) angepaßt sind, oder, besser noch, sich ihr selbständig anpassen (dies ist für sich nach oben verjüngende Masten (3) notwendig).
Die Größe der Fläche der Anpreßteile (15), über die das Gewicht von Lift plus Last (4a bzw. 4b) in die Mastwandung (3) eingeleitet wird, ist abhängig von Durchmesser, Material und Wandstärke des Mastes (3) und natürlich von der Last (4a oder 4b).
Die dem Mast (3) zugewandte Fläche der Anpreßteile (15) ist bevorzugt mit einer Beschichtung versehen, die zu einer hohen Haftreibung zwischen Anpreßteil (15) und Mast (3) führt, sobald das Anpreßteil (15) angedrückt wird. Bevorzugt sind die Anpreßteile (15) mit einer auch Toleranzen ausgleichenden Elastomerbeschichtung versehen.
Die Anpreßteile (15) können aktiv durch Pressen an den Mast (3) angedrückt werden, oder die Teile (15) können selbstanpressend sein. Dies kann z.B. dadurch erfolgen, daß sich unterhalb der jeweiligen Plattform (1 oder 16) ein schräg gegen die Mastwandung gerichteter Arm mit Reibungsfläche (15) am Ende befindet, der durch eine leichte dauerhafte Kraft (z.B. Federkraft) gegen die Mastwandung (3) drückt und an dieser während eines Anhebevorganges der entsprechenden Plattform (1 oder 16) entlangschleift.
Eine Abwärtsbewegung der Plattform (1 oder 16) preßt dann die Reibungsfläche (15) gegen den Mast (3), wodurch die Abwärtsbewegung sofort zum Stehen kommt.
Um den Lift abzusenken, müssen die Anpreßteile (15) vom Mast (3) abgelöst sein, sonst blockiert die Abwärtsbewegung sofort.

Das Verfahren nach Variante C verläuft wie bei den anderen Varianten, das Hubverfahren selbst ist aber wie soeben beschrieben.
Ein solcher Lift kann auch für Reparatur- und Wartungsarbeiten eingesetzt werden, wobei für einfache Arbeiten wesentlich leichter ausgeführte Plattformen (1, 16) verwendet werden können.

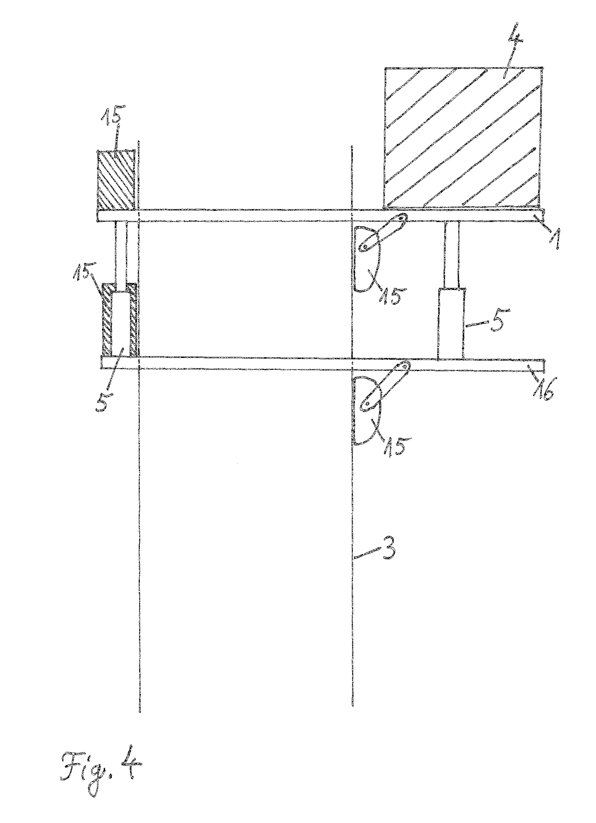

Fig. 4 zeigt schematisch einen solchen Lift ohne Ausgleichsgewicht am Mast (3) von der Seite. Die Anpreßteile (15) sind als bei geringfügiger Absenkung selbstanpressend ausgeführt: Auf der Lastseite als nach unten gerichtete gegen die Wand (3) gerichtete Arme mit Reibungsfläche (15), und auf der gegenüberliegenden Seite als einfache Elastomerkissen (15), die automatisch an die Mastwand (3) angepreßt werden, wenn die beweglichen Anpreßteile sich an die Mastwand (3) anpressen, und die auch bei geringfügiger Kippung der Liftplattform (1) angepreßt werden.
Ein entsprechender Lift mit Ausgleichsgewicht (17) wiese bevorzugt sowohl auf der Lastseite wie auch auf der Ballastseite identische Anpreßteile (15) auf, die symetrisch zum Mast (3) gegen die Mastwand (3) bewegt werden.

### Bezugszeichenliste

- 1: Liftplattform
- 2: Gleitlager, Rollenlager
- 3: errichteter Mast, Mastwandung
- 4a: Gondel
- 4b: Mastabschnitt
- 5: Presse
- 6: Schwerpunkt von Liftplattform plus Last
- 7: Schiene
- 8: Gelenk
- 9: Stabilisierträger
- 10: verschiebbarer Träger
- 11: optionaler elastomergepolsterter Sicherungsklemmfortsatz
- 12: Seilzug, Litzenheber
- 13: Flosse
- 14: Abstandshalter
- 15: Anpreßteil mit Haftreibungsfläche
- 16: Abstützplattform
- 17: (austarierbarer) Ballast
- 18: Sicherungsband

## Patentansprüche

1. Vorrichtung zur Errichtung von Windenergieanlagen, vor allem Offshore-Windenergieanlagen, die aus einem Mast (3) mit darauf montierter Rotorgondel (4a) bestehen, aus miteinander zu verbindenden großen Fertigteilen (Mastabschnitte (4b), Gondel (4a)),
**dadurch gekennzeichnet, daß** es sich um einen Lift handelt, der im wesentlichen aus einem die einwirkenden Kräfte aufnehmenden Förderweg und einem Lastaufnahmemittel für die Fertigteile (4a, 4b) besteht, wobei
a.) der bereits errichtete Teil des Mastes (3) selbst den alleinigen Förderweg für das Lastaufnahmemittel bildet und
b.) das Lastaufnahmemittel eine von einem Windenergieanlagenmast (3) zum nächsten Windenergieanlagenmast (3) transportable und dort erneut einsetzbare Liftplattform (1) ist, die im wesentlichen nur aus einer zum zeitweiligen Tragen der Gondel (4a) und/oder der Mastabschnitte (4b) ausreichend großen Plattform (1) und anhebenden Mitteln (5, 12, 16) sowie arretierenden Mitteln (15, 18, 11) für diese Plattform (1) besteht.

2. Vorrichtung nach Anspruch 1,
**dadurch gekennzeichnet, daß**
a.) der bereits errichtete Teil des Mastes (3) an seinem äuβeren Umfang mindestens zwei über seine Länge ungefähr senkrecht verlaufende Schienen (7) aufweist, die lösbar oder unlösbar am Mast (3) befestigt sind und
b.) die Liftplattform (1) Gleitkufen oder Rollenlager (2) aufweist, die in Kontakt zu den Schienen (7) stehen und mit denen die Liftplattform (1), durch die Schienen (7) geführt, bei Einwirkung durch die anhebenden Mittel (5) am Mast (3) entlang verfahren werden kann, und
c.) die Liftplattform (1) über Pressen (5) als Hebemittel verfügt, die mit ihrem unteren Ende an den Schienen (7) lösbar und gelenkig befestigbar sind und mit ihrem oberen Ende gelenkig an der Liftplattform (1) befestigt sind.

3. Vorrichtung nach Anspruch 1,
**dadurch gekennzeichnet, daß**
a.) der bereits errichtete Teil des Mastes (3) an seinem oberen Ende Befestigungsmittel zur lösbaren Befestigung von Seilzügen/Litzen (12) aufweist,
b.) an der Unterkonstruktion der Liftplattform (1) Seilzüge/Litzen (12) als kraftübertragende Mittel befestigt sind, die sich im Betriebszustand nach oben zu den Befestigungsmitteln am Mast (3) erstrecken,
c.) krafterzeugende an den Seilzügen/Litzen angreifende Mittel zur Anhebung der Liftplattform (1) vorhanden sind.

4. Vorrichtung nach Anspruch 1,
**dadurch gekennzeichnet, daß**
a.) das Lastaufnahmemittel im wesentlichen aus zwei übereinander angeordneten, senkrecht zueinander verschieblichen, im wesentlichen den Mast (3) umschließenden Strukturen (1, 16) besteht, die über zeitgesteuert an den Mast anpreßbare Mittel (15) verfügen, um sich durch Haftreibung am Mast (3) festzuklammern, und von denen die obere Struktur die Liftplattform (1) ist,
b.) die beiden Strukturen (1, 16) über Pressen (5) verbunden sind, die es gestatten,zwischen den beiden Strukturen (1, 16) Kräfte zu erzeugen, die die Strukturen (1, 16) auseinander und aufeinanderzu bewegen,
c.) eine Regeleinheit vorhanden ist, die die durch die Pressen (5) ausgeübte Relativbewegung der beiden Strukturen (1, 16) senkrecht zueinander steuert und nur dann ausführen läßt, wenn genau eine der beiden Strukturen (1, 16) gleichzeitig am Mast (3) festgeklammert ist.

5. Vorrichtung nach mindestens einem der Ansprüche 1 bis 4,
**dadurch gekennzeichnet, daß** die Liftplattform (1) um den Mast (3) herumreicht und auf der Seite, die der Nutzlast (4a, 4b) gegenüberliegt, ein Gegengewicht (17) zur Kompensation des Kragmomentes vorhanden ist.

6. Vorrichtung nach Anspruch 5,
**dadurch gekennzeichnet, daß** das Gegengewicht (17) ein mit Wasser befüllbarer und damit austarierbarer Behälter ist.

7. Verfahren zur Errichtung von Windenergieanlagen, vor allem Offshore-Windenergieanlagen, die aus einem Mast (3) mit darauf montierter Rotorgondel (4a) bestehen, aus miteinander zu verbindenden großen Fertigteilen (Mastabschnitte (4b), Gondel (4a)),
**dadurch gekennzeichnet, daß**
a.) eine transportable Liftplattform (1) plus Zubehör zum bereits errichteten Teil des Mastes (3) gebracht wird,
b.) die Liftplattform (1) über zusätzliche die Liftplattform (1) führende Mittel (7 oder 14) senkrecht verschiebbar im unteren Bereich an dem als Fördermittel dienenden Mast (3) angeordnet wird,
c.) Hebemittel (5, 12, 16) zwischen Liftplattform (1) und Mast (3) angebracht werden,
d.) die an das obere Ende des Mastes (3) zu transportierende Last (nächster Mastabschnitt (4b) oder Gondel (4a)) auf die zuvor arretierte Liftplattform (1) geschoben oder gehoben wird,
e.) die Liftplattform (1) unter Lösen der Arretierung durch die Hebemittel (5, 12, 16) an dem als Förderweg dienenden bereits vorhandenen Mast (3) kontinuierlich, oder taktweise durch Lösen und Neuverbinden der Hebemittel, so weit nach oben gefahren wird, daß die Tragefläche der Liftplattform (1) auf gleiche Höhe oder etwas über die Oberkante des Mastes (3) zu liegen kommt und in dieser Stellung durch Arretiermittel arretiert wird,
f.) die nach oben transportierte Last (Mastabschnitt (4b) oder Gondel (4a)) horizontal auf die Oberkante des Mastes (3) verschoben und dann darauf befestigt wird,
g.) die Liftplattform (1) nach Lösen der Arretierung mittels der Hebemittel (5, 12, 16) wieder kontinuierlich oder taktweise nach unten gefahren wird, und dort eine neue Last (4a, 4b) aufnimmt, wobei die Vorgänge c) bis g.) sich daran anschließend so oft wiederholen, bis die zu errichtenden Teile (4a, 4b) der Windenergieanlage installiert sind,
h.) die Liftplattform (1) und die Hebemittel (5, 12, 16) vom Mast (3) getrennt werden und zur nächsten zu errichtenden Windenergieanlage oder in ein Lager für eine spätere Verwendung verfrachtet werden.

8. Verfahren nach Anspruch 7,
**dadurch gekennzeichnet, daß** als Hebemittel Seilzüge oder Litzenheber (12) verwendet werden, die während des Hebevorganges mit ihrem einen Ende am oberen Ende des bereits errichteten Mastes (3) oder an dort befindlichen Mitteln lösbar befestigt sind und mit ihrem anderen Ende an einer Unterkonstruktion unter der Liftplattform (1).

9. Verfahren nach Anspruch 7,
**dadurch gekennzeichnet, daß** als Hebemittel Pressen (5) verwendet werden, die sich direkt oder mittels einer Hilfskonstruktion (16) am Mast (3) abstützen und die Liftplattform (1) taktweise nach oben schieben, wobei während jedes Schiebetaktes die Pressen (5) auf den Mast (3) und die Liftplattform (1) Schiebekräfte übertragen und nach dem Schiebetakt die Liftplattform (1) am Mast (3) arretiert wird und die Pressenabstützung am Mast (3) bis zum nächsten Abstützungspunkt für den nächsten Takt nach oben nachgezogen wird.
